# EUROPEAN PATENT APPLICATION

(11) **EP 4 141 210 A1**
(43) Date of publication of application: **01.03.2023**
(21) Application number: 21193541.6
(22) Date of filing: 27.08.2021
(51) Int. Cl.: E21B 4/00, E21B 7/02, E21B 17/03, F16L 19/02, F16J 15/34, F16J 15/44, F16J 15/54, E21B 17/05, E21B 17/07

(54) **SEALING ARRANGEMENT, FLOATING SPINDLE, AND METHOD OF SEALING**

(71) Applicant: Sandvik Mining and Construction Oy, 33330 Tampere (FI)
(72) Inventor: NIEMI, Jarkko, 33330 Tampere (FI); SILTALA, Hannu, 33330 Tampere (FI)
(74) Representative: Sandvik

(57) **Abstract**

A sealing arrangement, a floating spindle, and a method for sealing a rock drilling component. The sealing arrangement (13) comprises a sealing space (14) surrounding a drilling component (18) to be sealed. A casing (15) is arranged transversally movably inside the sealing space. A first sealing element (16) forms a radial sealing and is arranged to be moved together with the casing.

## Description

### Background of the invention

The invention relates to a sealing arrangement for sealing a rock drilling component.

The invention further relates to a floating spindle and method of sealing.

The field of the invention is defined more specifically in the preambles of the independent claims.

In mines and at other work sites different type of rock drilling rigs are used for drilling drill holes to rock surfaces. There are different solutions for sealing rotating drilling components. However, the known solutions have shown some disadvantages.

### Brief description of the invention

An object of the invention is to provide a novel and improved sealing arrangement, a floating spindle equipped with such sealing arrangement, and a method for sealing a rock drilling component.

The sealing arrangement according to the invention is characterized by the characterizing features of the first independent apparatus claim.

The floating spindle according to the invention is characterized by the characterizing features of the second independent apparatus claim.

The method according to the invention is characterized by the characterizing features of the independent method claim.

An idea of the disclosed solution is that a sealing arrangement is designed for sealing a movable rock drilling component of a rock drilling unit. The sealing arrangement comprises a radial sealing space surrounding the mentioned component and a separate casing is arranged radially movably inside the sealing space. The casing is provided with a radial first sealing element configured to provide sealing for the component. The arrangement further comprises one or more second sealing elements configured to provide sealing between the casing and the sealing space. In other words, a radially floating sealing system is provided for the rock drilling component.

An advantage of the disclosed solution is that it provides a proper sealing also in situations when there are worn bearings in the drilling unit wherefore the drilling component moves in transverse direction. The solution may thereby provide longer maintenance interval since the sealing arrangement is capable to adapt during the use. The disclosed solution can adapt also in situations when there are alignment deviations between machine components.

A further advantage is that the sealing arrangement has a simple, inexpensive, and robust structure. The solution can be implemented in a versatile manner in different rotation heads and rock drilling units.

According to an embodiment, the disclosed sealing arrangement is configured to seal an axially movable drilling component.

According to an embodiment, the disclosed sealing arrangement is configured to seal a rotating_drilling component.

According to an embodiment, the disclosed sealing arrangement is configured to seal a rotating and axially movable drilling component.

According to an embodiment, the disclosed sealing arrangement is configured to seal at least one of the following drilling components: a shank adapter of a rock drilling machine, an integrated drilling tool, a rock bolting tool, an axially moving element of a floating spindle, an axle of a gearing housing of rock drilling machine, a rotating axle or element of a rotating head of a DTH or rotary drilling unit.

According to an embodiment, the casing is made of metallic bearing material.

According to an embodiment, the casing is made of bronze which is intended for slide bearing material.

According to an embodiment, the casing is made on plastic or composite material.

According to an embodiment, the casing is made of steel.

According to an embodiment, the casing is made of cast iron. Alternatively, it can be made of different bimetal solutions.

According to an embodiment, the casing is provided with a coating made of low friction material or slide bearing material. The coating may be on a surface facing towards the rock drilling component being sealed. Alternatively, or in addition to, surfaces facing axial surfaces of the sealing may be coated thereby improving radial movement of the casing inside the sealing space.

According to an embodiment, the casing has ring-shaped configuration comprising a radial first sealing groove for receiving the first sealing element. In other words, cross section of the casing may substantially resemble a letter C opening towards the component being sealed.

According to an embodiment, cross section of the sealing space has an open end facing towards the component to be sealed and an opposite closed end, and there is a first dimension radially between the open and closed ends; cross section of the casing has a second dimension in radial direction; and the first radial dimension is greater than the second radial dimension whereby there is a clearance between the closed end of the sealing space and the casing.

According to an embodiment, there is an axial clearance between the casing and the sealing space so that the casing is freely movable radially inside the sealing space.

According to an embodiment, the second sealing element is a stationary seal facing towards the movable casing in transverse direction relative to the radial movement direction of the casing.

According to an embodiment, the sealing space comprises at least one second sealing groove for receiving the at least one second sealing element.

According to an embodiment, the second sealing groove is on axial surface of the sealing space.

According to an embodiment, the sealing space comprises two opposite axial surfaces both being provided with at least one second sealing groove. Then, at least two second sealing elements are implemented to seal the casing on its opposite sides.

According to an embodiment, the sealing space comprises two second sealing grooves on at least one axial surface of the sealing space. Then, there are two adjacent second sealing elements on at least one side of the casing.

According to an embodiment, the casing is configured to be in contact with the rock drilling component being sealed whereby lateral movement of the component is configured to generate lateral force for moving the sealing assembly in lateral direction together with the component.

According to an embodiment, the sealing space is openable in axial direction; the casing and the first sealing element are configured to form together a floating sealing component; and the mentioned sealing component is configured to be mounted inside the sealing space in one piece and in axial direction.

According to an embodiment, the first sealing element is a lip seal.

According to an embodiment, the second sealing element is an O-ring seal.

According to an embodiment, the disclosed solution relates to a floating spindle of a rock drilling unit. The floating spindle comprises: a first coupling end at a first end of the floating spindle for coupling the floating spindle to a rotating head of the rock drilling unit, and a second coupling end at an opposite second end of the floating spindle for coupling the floating spindle to a drilling tool, whereby the floating spindle is configured to transmit torque between the rotating head and the drilling tool; an axial first floating arrangement comprising at least a first rotating element and a second rotating element provided with an allowed limited axial relative movement between them; at least one axial fluid passageway passing through the first and second rotating elements and configured to transmit fluid from the rotating head to the drilling tool; an axial second floating arrangement comprising a connecting sleeve for connecting the fluid passageways of the first and second rotating elements, and wherein the connecting sleeve is mounted to the second rotating element and is axially movable relative to the first rotating element; and a sealing arrangement mounted to the first rotating element and is configured to provide an axial sealing for an outer sealing surface of the axially movable connecting sleeve. Furthermore, the mentioned sealing arrangement is in accordance with embodiments and features disclosed in this document.

According to an embodiment, the connecting sleeve protrudes axially from the first end side of the floating spindle. Then the connecting sleeve can be placed partly inside a rotation head when being mounted.

According to an embodiment, the sealing arrangement comprises an axially openable and closable disk-shaped cover element at the first end side of the floating spindle for mounting and dismounting the axial sealing. In other words, the axial sealing can be changed without dismantling the basic structure of the floating spindle.

According to an embodiment, the first rotating element of the floating spindle comprises a removable support element at the first end side of the floating spindle for mounting and dismounting the sealing arrangement to the first rotating element. In other words, the entire sealing arrangement can be changed or serviced without dismantling the basic structure of the floating spindle.

According to an embodiment, the axial first floating arrangement and the axial second floating arrangement of the floating spindle are located at an axial distance from each other. Then the second floating arrangement provided with the disclosed sealing arrangement is located closer to the rotation head as the first floating arrangement.

According to an embodiment, the disclosed solution relates to a method of sealing a movable rock drilling component of a rock drilling unit. The method comprises: providing a radial sealing space surrounding the mentioned component to be sealed; and arranging at least one sealing element inside the sealing space and to face towards the component. The method further comprises supporting a radial first sealing element to a separate a casing and arranging the casing together with the radial first sealing element inside the radial sealing space in axial direction. Further, the casing and the radial first sealing element are allowed to float radially inside the sealing space in response to lateral movement of the rock drilling component being sealed.

The above disclosed embodiments may be combined in order to form suitable solutions having those of the above features that are needed.

### Brief description of the figures

Some embodiments are described in more detail in the accompanying drawings, in which
Figure 1 is a schematic side view of a rock drilling rig provided with a rock drilling unit,
Figure 2 is a schematic view of a rock drilling unit suitable for down-the-hole drilling,
Figure 3 is a simplified diagram showing some features of the disclosed sealing arrangement,
Figures 4 and 5 are schematic and cross-sectional side views of two different embodiments of the disclosed sealing arrangement;
Figure 6 is a schematic, partial and cross-sectional side view of an embodiment wherein the sealing arrangement further comprises rolling bearings,
Figure 7 is a simplified diagram showing some features of a floating spindle of a rock drilling unit,
Figure 8 is a schematic side view of a floating spindle when mounted to a rotating head and equipped with a drilling tool, and
Figure 9 is a schematic and cross-sectional side view of a floating spindle.

For the sake of clarity, the figures show some embodiments of the disclosed solution in a simplified manner. In the figures, like reference numerals identify like elements.

### Detailed description of some embodiments

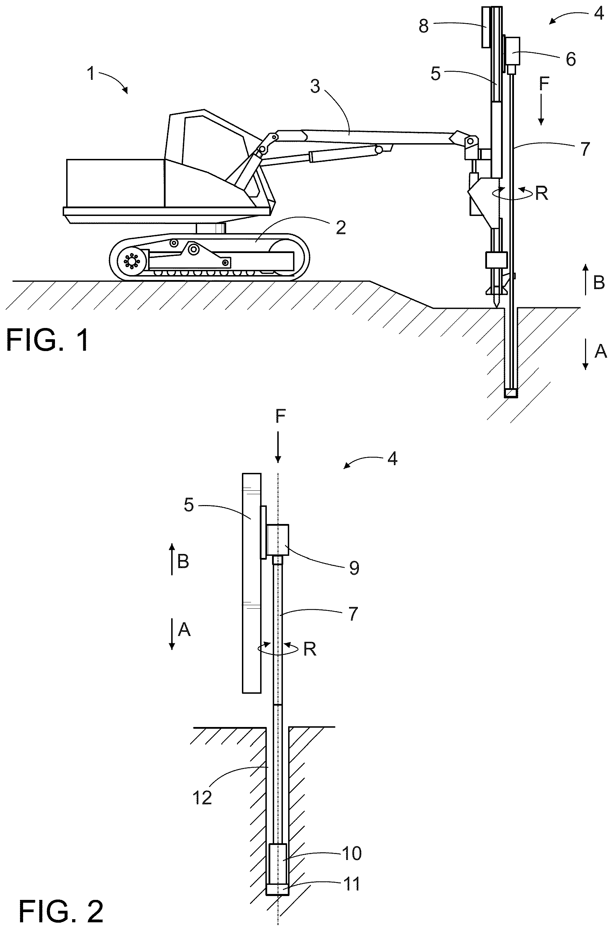

Figure 1 shows a rock drilling rig 1 intended for surface drilling. The rock drilling rig 1 comprises a movable carrier 2 and at least one drilling boom 3 connected to the carrier 2. At a distal end portion of the drilling boom 3 is a drilling unit 4 provided with a feed beam 5 and a rock drilling machine 6 supported on it. A drilling tool 7 is connectable to the drilling machine 6. The rock drilling machine 6 may comprise a shank adaptor at a front end of the rock drilling machine 6 for connecting the tool 7. The rock drilling machine 6 may comprise an impact device and a rotating device. Then the rock drilling machine implements percussion drilling. Alternatively, the rock drilling machine comprises only a rotating device and then implements rotary drilling. The rock drilling machine 6 may be moved on the feed beam 5 by means of a feed device 8 in impact direction A and return direction B. Rotation R and feed force F are marked to Figure 1. Structure of the rock drilling machine 6 or components mounted to it may be provided with a sealing arrangement disclosed in this document.

Figure 2 discloses another type of a drilling unit 4. In this case there is a rotating head 9 movably arranged on a feed beam 5 and an impact device 10 is located at an opposite end of a drilling tool 7. Thus, the impact device 10 is close to a drill bit 11 inside a drill hole 12. Therefore, this drilling technique is known as down-the-hole drilling (DTH-drilling). Structure of the rotating head 9 or components mounted to it may be provided with a sealing arrangement disclosed in this document.

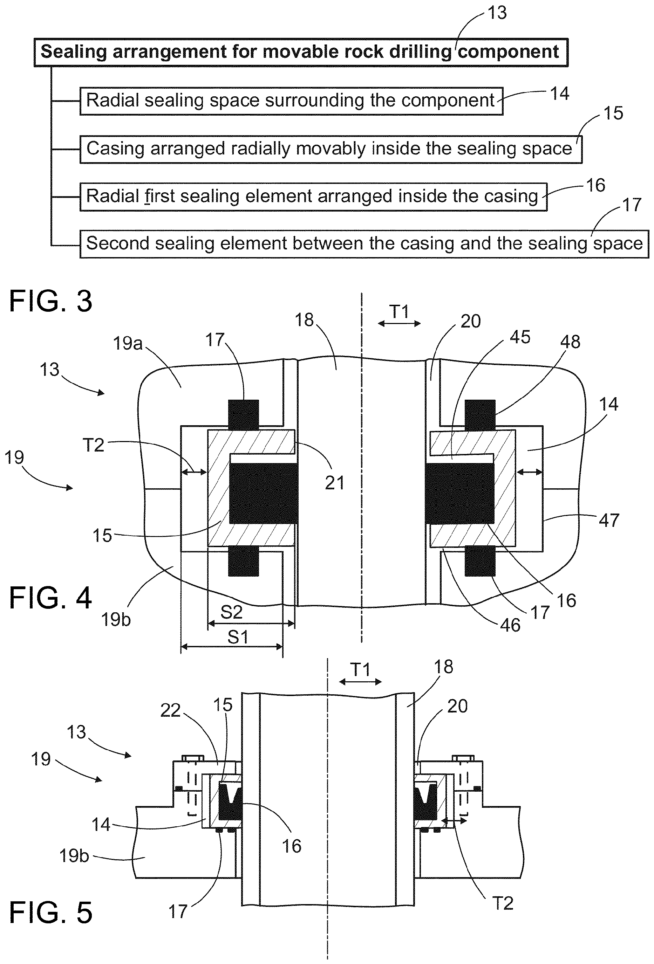

Figure 3 discloses a sealing arrangement 13 for providing sealing for a movable drilling component, such as a drilling tool. The sealing arrangement 13 comprises a radial sealing space 14 which is surrounding the drilling component. A casing 15 is arranged inside the sealing space 14 and the casing is allowed to move in radial direction inside the sealing space 14. Further, there is a first sealing element 16 mounted inside the casing 15. Purpose of the first sealing element 15 is to provide radial sealing for the rock drilling component. In order to prevent leakages between the casing 15 and the sealing space 14, there are one or more second sealing elements 17.

Figure 4 discloses a sealing arrangement 13 comprising a radial sealing space 14 surrounding a drilling component 18, which may be a solid or tubular elongated element such as drilling tool. The sealing space 14 may be formed to a body part 19, 19a, 19b, cover element or other frame structure through which the drilling component 18 passes. There is an annular clearance 20 between the drilling component 18 and the body part 19 so that mutual transverse movement T1 between them is possible due to the clearance 20. However, the sealing arrangement 13 provides a proper sealing between the drilling component 18 and the body part 19 in spite of the allowed transverse movement T1.

A casing 15 is mounted to the sealing space 14. The casing may have a substantially C-formed cross-section and it may provide support for a first sealing element 16. In other words, the casing 15 may have a ring-shaped configuration comprising a radial first sealing groove 45 for receiving the first sealing element 16. When the drilling component moves T1 it forces the casing 15 to move T2 in transverse direction. Branches 21 or other parts of the casing 15 may receive the moving force of the drilling component 18. Therefore, the casing 15 may be made of bearing material or may comprise wear resistant bearing elements or coatings on surfaces which can contact the drilling component 18. The drilling component 18 may be rotatable against its longitudinal axis but may in some cases also be movable in axial direction. Between the casing 15 and the sealing space 14 there are one or more second sealing elements 17. In Figure 4 the second sealing elements 17 are axial seals arranged to provide sealing between axial surfaces of the casing 15 and axial surfaces of the sealing space. The second sealing elements 17 may be ring shape elements and their cross section may be selected according to the need. Thus, the second sealing elements 17 may alternatively be lip seals or O-rings, for example. There may sealing grooves 48 on axial surfaces of the sealing space for receiving the second sealing elements 17. Number of ring shape second sealing elements 17 may one, two, three or even more.

Figure 4 further discloses that cross section of the sealing space 14 has an open end 46 facing towards the component 18 to be sealed and an opposite closed end 47 facing away. There is a first dimension S1 radially between the open and closed ends 46, 47. Cross section of the casing 15 has a second dimension S2 in radial direction. The first radial dimension S1 is greater than the second radial dimension S2 whereby there is a clearance between the closed end 47 of the sealing space 14 and the casing 15.

Figure 5 discloses another sealing arrangement 13 which has some differences in relation to the structure disclosed in the previous Figure 4, but which implements the same main principles regarding the sealing. In this solution a radial sealing space 14 is limited by means of a removable cover element 22 or lid and a body part 19b. Then the sealing space 14 is easy to open and close without any need to dismantle the entire structure or larger body parts. Figure 5 further discloses that a first sealing element 16 may be a lip seal and that location and amount of second sealing elements 17 may be selected according to need.

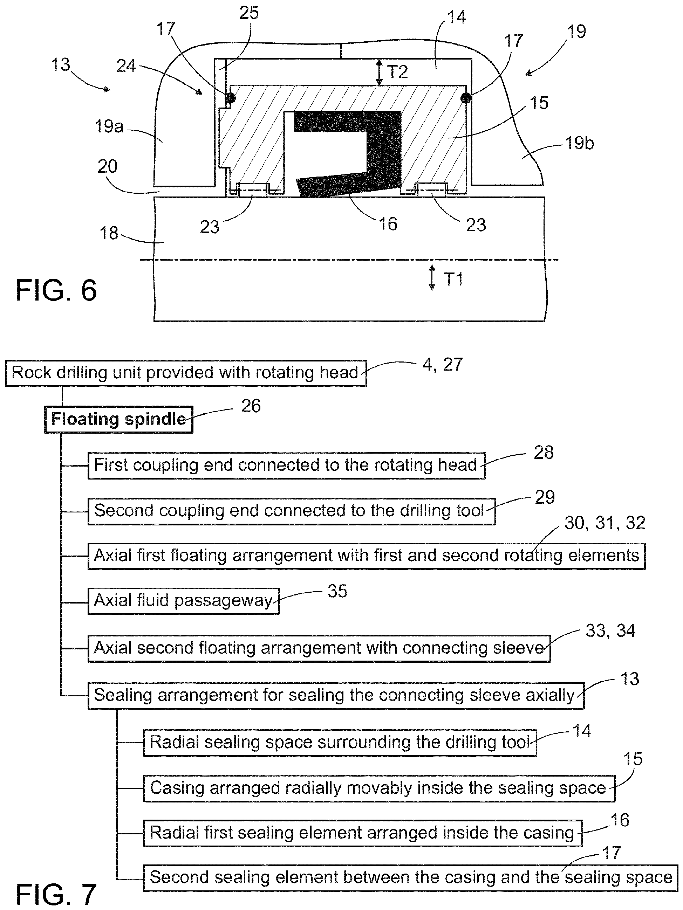

Figure 6 discloses a sealing arrangement 13 wherein a casing 15 is supported against a drilling component 18 by means of roller elements 23. In other words, there is a roller bearing between the casing 15 and the drilling component. Then the casing needs not to be made of bearing material. In an alternative solution the roller elements 23 may be substituted by slide bearing elements. Further, rotation of the casing 15 in relation to a radial sealing space 14 may be prevented by means of a rotation locking arrangement 24. One or both axial ends of the casing 15 may be provided with one or more rotation locking arrangements 24 which are radially directed and allow the casing 15 to move radially inside the sealing space 14. The rotation locking arrangement 24 may comprise a radial groove (not shown) and a radial rib 25 matching with the groove, for example. The drilling component 18 may be rotated around its longitudinal axis. In some cases, it may also be moved for a limited axial distance. The distance can be limited so that the bearings will not enter a sealing area. Further, the disclosed sealing arrangement 13 allows the drilling component 18 to move T1 in transverse direction and then provides it with sealing and support. Other components and features of the sealing are in accordance with the features disclosed in other Figures and embodiments disclosed in this document.

Figure 7 discloses some features of a floating spindle 26 mountable to a rotation head 27 of a rock drilling unit 4. The floating spindle 26 comprises a first coupling end 28 for connecting the floating spindle 26 to the rotation head 27. At an opposite end of the floating spindle 26 is second coupling end 29 for connecting a rock drilling tool. Purpose of the floating spindle 26 is to allow limited axial movement between the rotation head 27 and the rock drilling tool and to simultaneously transmit rotation torque and to serve as an air flow path between the rotation head 27 and an inner channel of the tubular rock drilling tool. Therefore, the floating spindle 26 comprises an axial first floating arrangement 30 provided with a first rotating element 31 and a second rotating element 32. There is also an axial second floating arrangement 33 comprising a connecting sleeve 34. Main purpose of the first floating arrangement 30 is to transmit the rotation torque whereas main purpose of the second floating arrangement 33 is to conduct the flow of pressurized air of other fluid. Thus, there is one or more axial fluid passageways 35 in the floating spindle 26. The connecting sleeve 34 is a rock drilling component an outer surface of which is sealed by means of the disclosed sealing arrangement 13 so that a limited transverse movement is allowed.

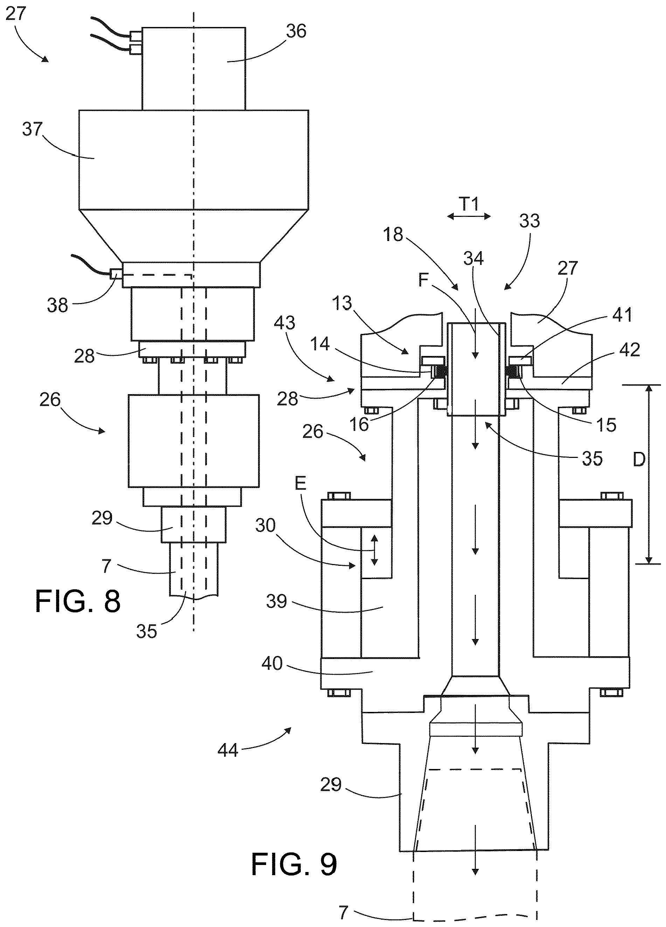

Figure 8 discloses a floating spindle 26 which is mounted to a rotation head 27 and is provided with a rock drilling tool 7 at its opposite end. There is a first coupling end 28 and a second coupling end 29 in the floating spindle 26 for executing the connections. The rotation head 27 may comprise one or more motors 36 and a gear housing 37. The motors may be hydraulic or electrical. The rock drilling tool 7 and the floating spindle 26 comprise axial fluid passageways 35 which are in fluid connection to a fluid feed port 38 of a rotation head 27. Typically, compressed air is fed through the fluid passageways 35 to a bottom of a drill hole for actuating an impact device and for flushing the drill hole from drilling cuttings.

Figure 9 discloses a floating spindle 26 which is provided with an axial first floating arrangement 30 comprising a first rotating element 39 and a second rotating element 40. The second rotating element can move an allowed limited axial movement E in relation to the first rotating element 39. There is also an axial second floating arrangement 33 comprising a connecting sleeve 34 for connecting fluid passageways 35 of the first and second rotating elements 39, 40. The connecting sleeve 34 is mounted to the second rotating element 40 and is axially movable relative to the first rotating element 39. When the second rotating element 40 moves downwards in Figure 9, then the connecting sleeve 34 moves downwards together with the second rotating element. Alternatively, when the first rotating element 39 moves upwards, then the connecting sleeve 34 keeps its axial position. In both cases, when the relative axial movement E, or axial floating, occurs between the rotating elements 39, 40 i.e. at the first floating arrangement 30, then there is also axial floating at the second floating arrangement 33 i.e. between the connecting sleeve 34 and a sealing arrangement 13. The connecting sleeve 34 ensures that flow F of compressed air passes from a rotating head 27 through the floating spindle 26 to a drilling tool 7. The sealing arrangement 13 seals an outer surface of the connecting sleeve 34 and the first rotating element 39 and prevents air leakage despite of the axial floating movement E. The sealing arrangement 13 is in accordance with the solution disclosed in this document so that the sealing can adopt to possible axial movement T1 of the second rotating element 40 and the connecting sleeve 34. As a matter of fact, in this case the connecting sleeve 34 is a rock drilling component 18 which is sealed by the disclosed sealing arrangement 13. The connecting sleeve 34 protrudes axially from the first end side of the floating spindle 26. Then the sealing arrangement 13 comprises an axially openable and closable disk-shaped cover element 41 at the first end side of the floating spindle 26 for mounting and dismounting an axial sealing 16. The first rotating element 39 comprises a removable support element 42 at the first end side 43 of the floating spindle 26 for providing a sealing space for the axial sealing 16 and a transversally movable casing 15. The mentioned cover element 41 may be mounted to the support element 42.

Figure 9 further shows that the axial first floating arrangement 30 and the axial second floating arrangement 33 are located at an axial distance D from each other. The second floating arrangement 33 is located closer to the first end 43 of the floating spindle 26 as compared to the first floating arrangement 30. The second floating arrangement 33 may be located at a second end 44 or at a middle portion of the floating spindle 26.

The drawings and the related description are only intended to illustrate the idea of the invention. In its details, the invention may vary within the scope of the claims.

## Claims

1. A sealing arrangement (13) for sealing a movable rock drilling component of a rock drilling unit (4);
wherein the sealing arrangement (13) comprises:
a radial sealing space (14) surrounding the mentioned component to be sealed; and
at least one sealing element arranged inside the sealing space (14) and facing towards the component;
**characterized in that** the arrangement (13) further comprises:
a casing (15) arranged radially movably inside the sealing space (14);
a radial first sealing element (16) arranged inside the casing (15);
and at least one second sealing element (17) configured to provide sealing between the casing (15) and the sealing space (14).

2. The arrangement as claimed in claim 1, **characterized in that**
the casing (15) is made of metallic bearing material.

3. The arrangement as claimed in claim 1 or 2, **characterized in that**
the casing (15) has ring-shaped configuration comprising a radial first sealing groove (45) for receiving the first sealing element (16).

4. The arrangement as claimed in any one of the preceding claims 1 - 3, **characterized in that**
cross section of the sealing space (14) has an open end (46) facing towards the component (18) to be sealed and an opposite closed end (47), and there is a first dimension (S1) radially between the open and closed ends (46, 47);
cross section of the casing (15) has a second dimension (S2) in radial direction; and
the first radial dimension (S1) is greater than the second radial dimension (S2) whereby there is a clearance between the closed end (47) of the sealing space (14) and the casing (15).

5. The arrangement as claimed in any one of the preceding claims 1 - 4, **characterized in that**
the second sealing element (17) is a stationary seal facing towards the movable casing (15) in transverse direction relative to the radial movement direction (T2) of the casing (15).

6. The arrangement as claimed in any one of the claims 1 - 5, **characterized in that**
the sealing space (14) comprises at least one second sealing groove (48) for receiving the at least one second sealing element (17).

7. The arrangement as claimed in any one of the preceding claims 1 - 6, **characterized in that**
the casing (15) is configured to be in contact with the rock drilling component (18) to be sealed whereby lateral movement of the component (18) is configured to generate lateral force for moving the sealing assembly (13) in lateral direction together with the component (18).

8. The arrangement as claimed in any one of the claims 1 - 7, **characterized in that**
the sealing space (14) is openable in axial direction;
the casing (15) and the first sealing element (16) are configured to form together a floating sealing component; and
the mentioned sealing component is configured to be mounted inside the sealing space (14) in one piece and in axial direction.

9. The arrangement as claimed in any one of the claims 1 - 8, **characterized in that**
the first sealing element (16) is a lip seal.

10. A floating spindle (26) of a rock drilling unit (4), comprising:
a first coupling end (28) at a first end (43) of the floating spindle (26) for coupling the floating spindle (26) to a rotating head (27) of the rock drilling unit (4), and a second coupling end (29) at an opposite second end (44) of the floating spindle (26) for coupling the floating spindle (26) to a drilling tool (7), whereby the floating spindle (26) is configured to transmit torque between the rotating head (27) and the drilling tool (7);
an axial first floating arrangement (30) comprising at least a first rotating element (39) and a second rotating element (40) provided with an allowed limited axial relative movement (E) between them;
at least one axial fluid passageway (35) passing through the first and second rotating elements (39, 40) and configured to transmit fluid from the rotating head (27) to the drilling tool (7);
an axial second floating arrangement (33) comprising a connecting sleeve (34) for connecting the fluid passageways (35) of the first and second rotating elements (39, 40), and wherein the connecting sleeve (34) is mounted to the second rotating element (40) and is axially movable relative to the first rotating element (39); and
a sealing arrangement (13) mounted to the first rotating element (39) and is configured to provide an axial sealing for an outer sealing surface of the axially movable connecting sleeve (34);
**characterized in that**
the sealing arrangement (13) is in accordance with any one of the previous claims 1 - 9.

11. The floating spindle as claimed in claim 10, **characterized in that**
the connecting sleeve (34) protrudes axially from the first end side (43) of the floating spindle (26).

12. The floating spindle as claimed in claim 10 or 11, **characterized in that**
the sealing arrangement (13) comprises an axially openable and closable disk-shaped cover element (41) at the first end side (43) of the floating spindle (26) for mounting and dismounting an axial sealing (16).

13. The floating spindle as claimed in any one of the claims 10 - 12, **characterized in that**
the first rotating element (39) comprises a removable support element (42) at the first end side (43) of the floating spindle (26) for mounting and dismounting the connecting sleeve (34) to the first rotating element (39).

14. The floating spindle as claimed in any one of the claims 10 - 13, **characterized in that**
the axial first floating arrangement (30) and the axial second floating arrangement (33) are located at an axial distance (D) from each other; and
the second floating arrangement (33) is located closer to the first end (43) of the floating spindle (26) as compared to the first floating arrangement (30).

15. A method of sealing a movable rock drilling component (18) of a rock drilling unit (4),
wherein the method comprises:
providing a radial sealing space (14) surrounding the mentioned component (18) to be sealed; and
arranging at least one sealing element inside the sealing space (14) and to face towards the component (18);
**characterized by**
supporting a radial first sealing element (16) to a separate casing (15);
arranging the casing (15) together with the radial first sealing element (16) inside the radial sealing space (14) in axial direction;
and allowing the casing (15) and the radial first sealing element (16) to float radially inside the sealing space (14) in response to lateral movement (T1) of the rock drilling component (18) being sealed.
